# EUROPEAN PATENT APPLICATION

(11) **EP 2 605 329 A1**
(43) Date of publication of application: **19.06.2013**
(21) Application number: 11816455.7
(22) Date of filing: 10.08.2011
(51) Int. Cl.: H01M 12/06, H01M 6/04, H01M 12/08

(54) **MAGNESIUM BATTERY**

(30) Priority: 10.08.2010 JP 2010179770
(71) Applicant: Aqumo Co. Ltd., Tokyo 106-0045 (JP)
(72) Inventor: SUZUKI, Yukiyoshi, Tokyo 106-0045 (JP)
(74) Representative: Peter, Julian
(86) International application number: PCT/JP2011/068258
(87) International publication number: WO 2012/020791

(57) **Abstract**

Provided is a magnesium battery in which the negative electrode capacity thereof can be increased sustainably. The magnesium battery (100) comprises a negative electrode (110) which is composed of magnesium and a liquid-retaining section (120) in which an aqueous electrolytic solution that can cause the elution of magnesium ions from the negative electrode (110) can be retained, wherein the liquid-retaining section (120) can retain an aqueous solution of a citric acid salt as an aqueous electrolytic solution and can generate an electromotive force sustainably between the negative electrode (110) and a positive electrode. Thus, citric acid salt ions and magnesium ions eluted from the negative electrode (110) form a complex, thereby increasing the solubility of the magnesium ions. As a result, the precipitation of magnesium oxide in the negative electrode (110) can be prevented and magnesium can be electrolyzed sustainably, whereby the negative electrode capacity in the magnesium battery (100) can be increased sustainably.

## Description

### TECHNICAL FIELD

The present invention relates to a magnesium battery which has a negative electrode composed of magnesium.

### BACKGROUND ART

A battery using magnesium or an alloy thereof as an active material for a negative electrode is conventionally known (see, for example, Patent Document 1 and Non-Patent Document 1). For example, the manganese dioxide battery disclosed in Patent Document 1 uses magnesium or an alloy thereof as an active material for a negative electrode, manganese dioxide as an active material for a positive electrode, and magnesium perchlorate as a main electrolytic solution. Further, the air-magnesium battery disclosed in Non-Patent Document 1 uses oxygen in the air as an active material for a positive electrode, magnesium as an active material for a negative electrode, and brine as an electrolytic solution.
Patent Document 1: Japanese Unexamined Patent Application, Publication No. 2003-338492
Non-Patent Document 1: Kobayashi Akio, "Fabrication and Application of an Air Magnesium Battery" [online], Toray Industries, Inc., [searched on Dec 17, 2008], internet <URL: http://www.toray.co.jp/tsf/rika/pdf/rik_008.pdf#search='Fabric ation and application of an air magnesium battery'>

### DISCLOSURE OF THE INVENTION

### Problems to be Solved by the Invention

However, according to the magnesium battery described above, there is a problem since, due to high oxidation and reduction potentials, hydrogen is generated at a negative electrode and thus the theoretical capacity of the negative electrode cannot be obtained stably. Like a common battery, when an alkali solution is used and a magnesium negative electrode is used to suppress self-discharge, a film of magnesium oxide is formed on the surface of the negative electrode due to poor solubility of magnesium hydroxide, and as a result, the battery reaction is not sustained. For such reasons, a method of suppressing self-discharge by adding an organic compound or the like in a neutral region may be considered. However, it is impossible to fully utilize the capacity of magnesium for the battery reaction.

The purpose of the present invention, which is devised in view of the above circumstances, is to provide a magnesium battery whose negative electrode capacity can be sustainably high.

### Means for Solving the Problems

In order to achieve the purpose described above, the magnesium battery according to the present invention is characterized in that it has a negative electrode which is composed of magnesium and a liquid-retaining section in which an aqueous electrolytic solution that causes the elution of magnesium ions from the negative electrode can be retained, in which the liquid-retaining section retains an aqueous solution of a citric acid salt as an aqueous electrolytic solution.

Thus, the magnesium battery of the present invention includes an aqueous solution of a citric acid salt as an electrolytic solution. Accordingly, citric acid ions and magnesium ions eluted from the negative electrode form a complex, thereby increasing the solubility of the magnesium ions. As a result, the precipitation of magnesium oxide on the negative electrode can be suppressed and magnesium can be electrolyzed sustainably, whereby the negative electrode capacity of the magnesium battery can be sustainably high.

The magnesium battery according to the present invention is also characterized in that the liquid-retaining section retains a citric acid salt in a dry state. Accordingly, the magnesium battery can be stored for a long period of time in a dry state. Further, upon permeation of water into the liquid-retaining section at the time of use, an aqueous solution of a citric acid salt is formed, generating an electromotive force.

The magnesium battery according to the present invention is also characterized in that the liquid-retaining section retains an aqueous solution of a citric acid salt as an aqueous electrolytic solution. Accordingly, the magnesium battery can be used in its own state, resulting in better handling.

The magnesium battery according to the present invention is also characterized in that the concentration of citric acid ions included in the aqueous electrolytic solution is between 0.21 mol/L and 0.89 mol/L. Since the concentration of citric acid ions is 0.21 mol/L or more, magnesium ions can easily form a complex with citric acid ions. Further, since the concentration of citric acid ions is 0.89 mol/L or less, a high level of solubility of the complex can be maintained. As a result, the negative electrode capacity of a magnesium battery can be sustainably high.

The magnesium battery according to the present invention is also characterized in that the aqueous electrolytic solution has a pH between 7 and 11. By having a pH of 7 or higher, hydrogen is not generated, and therefore loss of negative electrode capacity caused by self-discharge can be prevented. Further, by having a pH of 11 or lower, formation of a magnesium oxide film caused by citric acid ions can be prevented. As a result, the negative electrode capacity of the magnesium battery can be sustainably high.

The magnesium battery according to the present invention is also characterized in that the aqueous electrolytic solution contains an aluminum hydroxide coordination complex with citric acid ions. In the aqueous electrolytic solution which contains an aluminum hydroxide coordination complex with citric acid ions, the hydrogenation voltage is increased, and thus the self-discharge is suppressed even in an acidic region and the original magnesium capacity can be achieved. As a result, even when the pH is changed due to a positive electrode reaction, the electromotive force of the battery can be maintained.

The present invention is also characterized in that citric acid salts are used as an electrolyte of the magnesium battery.

### Effects of the Invention

According to the invention, citric acid ions form a complex with magnesium ions eluted from the negative electrode to increase the solubility of magnesium hydroxide, and thus the precipitation of magnesium oxide is suppressed, enabling sustained electrolysis of magnesium. As a result, the negative electrode capacity of the magnesium battery can be sustainably high.

### BRIEF DESCRIPTION OF THE DRAWINGS

FIG. 1 is a cross-sectional view of a magnesium battery according to the invention.
FIG. 2A is a table illustrating the relationship between electrolytic solution pH and negative electrode capacity with respect to the Examples.
FIG. 2B is a table illustrating the relationship between electrolytic solution pH and negative electrode capacity with respect to the Examples.
FIG. 2C is a table illustrating the relationship between electrolytic solution pH and negative electrode capacity with respect to the Comparative Examples.
FIG. 3A is a graph illustrating the relationship between electrolytic solution pH and negative electrode capacity with respect to the Examples.
FIG. 3B is a graph illustrating the relationship between electrolytic solution pH and negative electrode capacity with respect to the Examples.
FIG. 3C is a graph illustrating the relationship between electrolytic solution pH and negative electrode capacity with respect to the Comparative Examples.
FIG. 4A is a graph illustrating the relationship between the negative electrode capacity and negative electrode potential for a case in which an aluminum hydroxide complex is contained in the electrolytic solution.
FIG. 4B is a graph illustrating the relationship between the negative electrode capacity and negative electrode potential for a case in which an aluminum hydroxide complex is not contained in the electrolytic solution.

### EXPLANATION OF REFERENCE NUMERALS

100 Magnesium battery
110 Negative electrode
120 Separator (liquid-retaining section)
130 Oxygen adsorbent body (liquid-retaining section)
140 Positive electrode current collector

### PREFERRED MODE FOR CARRYING OUT THE INVENTION

Next, the embodiments of the present invention are explained with reference to the drawings.

### [Embodiment 1]

### (Configuration of magnesium battery)

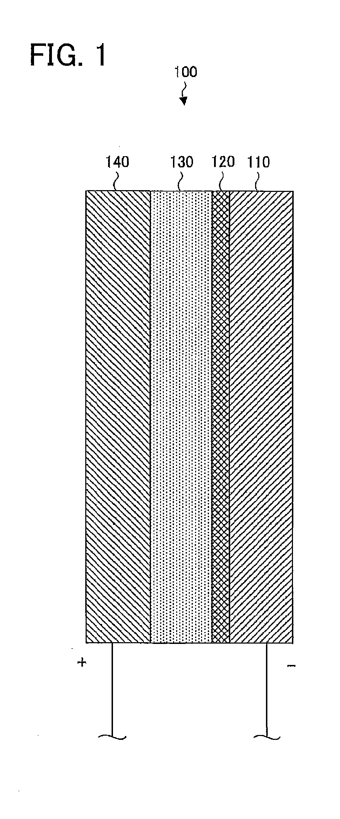

FIG. 1 is a cross-sectional view of a magnesium battery 100. The magnesium battery 100 is equipped with a negative electrode 110, a separator 120, an oxygen adsorbent body 130, and a positive electrode collector 140. The negative electrode 110 is composed of magnesium and it is formed on one end of the magnesium battery 100. When the separator 120 retains an aqueous solution, magnesium is eluted into the aqueous solution (Mg → Mg⁺² + 2e⁻), generating magnesium ions. Further, the separator 120 and the oxygen adsorbent body 130 constitute the liquid-retaining section, by which an aqueous electrolytic solution is retained.

The separator 120 is situated between the negative electrode 110 and the oxygen adsorbent body 130. The separator 120 can prevent short circuits and is hydrophilic, and thus has a liquid-retaining function for retaining an aqueous electrolytic solution. For example, polypropylene fiber, fiberglass and filter paper or the like may be used as the separator 120. However, material for the separator 120 is not particularly limited to them, so long as the separator has an electric insulating property and a liquid-retaining property. Further, it is also possible for the magnesium battery 100 to be stored with the separator 120 in a dry state and used after having water permeate into the separator 120 at the time of use. For such a case, polyhydric carboxylic acid salts are maintained in advance within the separator 120 or the oxygen adsorbent body 130. It also includes a case in which polyhydric carboxylic acid salts are maintained between the separator 120 and the oxygen adsorbent body 130.

The electrolytic solution is an aqueous solution of polyhydric carboxylic acid salts. By including polyhydric carboxylic acid ions in an electrolytic solution, the polyhydric carboxylic acid ions form a complex with magnesium ions that are eluted from the negative electrode 110, and therefore the solubility of magnesium hydroxide is increased. Because of the buffering action of the citric acid, alkalization of an electrolytic solution is prevented. As a result, precipitation of magnesium oxide is prevented and magnesium can be electrolyzed sustainably. As for the polyhydric carboxylic acid ions, citric acid ions or succinic acid ions may be used, for example.

The concentration of polyhydric carboxylic acid ions included in the electrolytic solution is preferably between 0.2 mol/L and 0.9 mol/L, and more preferably between 0.21 mol/L and 0.89 mol/L. Since the concentration of the polyhydric carboxylic acid ions is 0.21 mol/L or more, a complex can be easily formed. Further, since the concentration of the polyhydric carboxylic acid ions is 0.89 mol/L or less, a high solubility of the complex can be maintained.

The pH of the electrolytic solution is between 7 and 11. Since the pH is 7 or higher, hydrogen is not generated, and therefore loss of the negative electrode capacity caused by self-discharge can be prevented. Further, since the pH is 11 or lower, formation of a magnesium oxide film caused by polyhydric carboxylic acid ions can be prevented.

The oxygen adsorbent body 130 is closely adhered to the separator 120 and is porous. The oxygen adsorbent body 130 adsorbs oxygen as a positive electrode. The oxygen adsorbent body 130 may contain an oxygen adsorbing material like activated charcoal in voids in a porous body or the oxygen adsorbent body 130 itself may be carbon fibers of activated charcoal. Examples of a porous body for holding an oxygen adsorbing material include non-woven fabrics. When the electrolytic solution is retained in the separator 120, the electrolytic solution also permeates into the oxygen adsorbent body 130. At that time, the oxygen adsorbent body 130 adsorbs and reduces oxygen in the air as a positive electrode, generating hydroxide ions in the electrolytic solution (O₂ + 2H₂O + 4e⁻ → 40H⁻).

The positive electrode collector 140 is formed on the other end of the magnesium battery 100. The positive electrode collector 140 consists of a conductor, and is connected to the oxygen adsorbent body 130 and supplies electrons to the oxygen adsorbent body 130. The positive electrode collector 140 is suitably, for example, a metal such as copper. However, as long as the collector is a conductor, it is not particularly limited to copper. In the magnesium battery 100, the negative electrode 110, the separator 120, the oxygen adsorbent body 130, and the positive electrode collector 140 are laminated in order, and it is preferable that they be closely adhered to each other. By having higher contact surface between them, it is possible to increase the current value. Further, by laminating a plurality of the magnesium batteries 100 having the constitution described above, the performance of such a battery may be further enhanced.

Further, while according to the above example implementation, the magnesium battery 100 has the oxygen adsorbent body 130 and uses oxygen as a positive electrode, an arbitrary positive electrode may be used. Although hydroxide ions are commonly generated in an electrolytic solution, it is not particularly limited thereto. Examples of the positive electrode include manganese oxide and nickel hydroxide. The magnesium battery 100 may have the above members instead of the oxygen adsorbent body 130. However, considering the positive electrode capacity per positive electrode active material, it is preferable that oxygen be used as a positive electrode active material.

### EXAMPLES

### Example 1

A half cell experiment was performed for the magnesium battery 100 in which magnesium and an aqueous solution of polyhydric carboxylic acid salts were used as the negative electrode 110 and as the electrolytic solution, respectively. Specifically, a sufficiently large electrode was used as a positive electrode, so that only the activity of the negative electrode 110 was examined. For a case in which a solution containing citric acid ion or succinic acid ion was used as an aqueous solution of polyhydric carboxylic acid salts, voltage and capacity (that is, the product of current and hour per weight of magnesium) of the negative electrode 110 were measured for each positive electrode. Further, as a comparative example, voltage and capacity were also measured for a magnesium battery having the same constitution except that a 4% aqueous sodium chloride solution was used instead of an aqueous solution of polyhydric carboxylic acid salts.

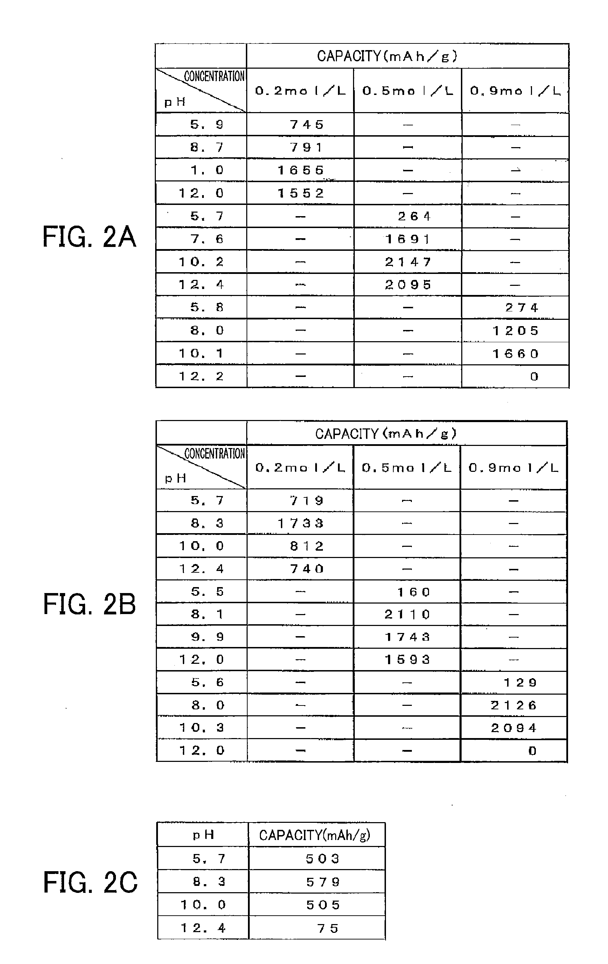

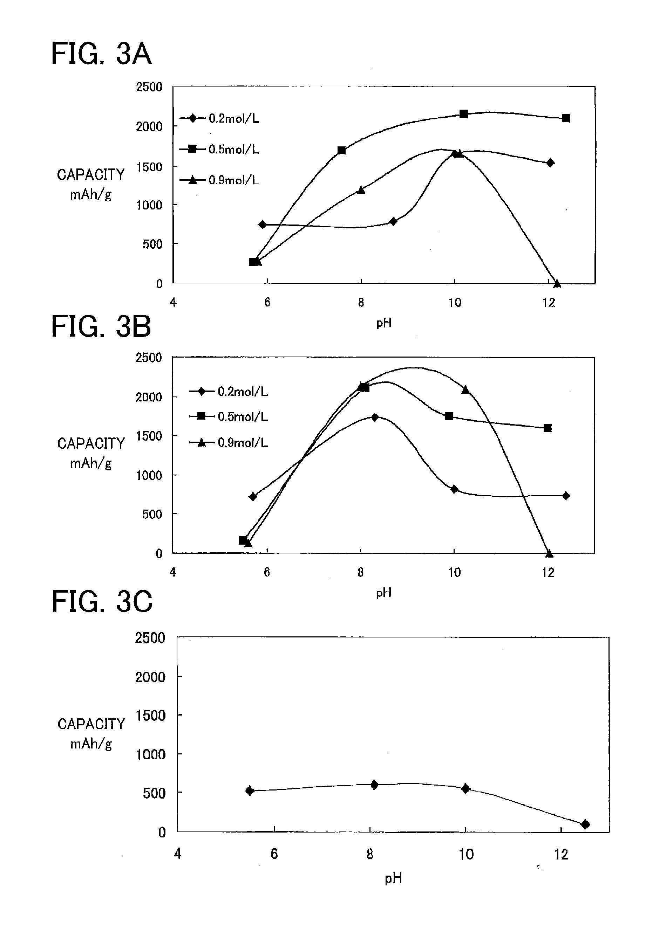

FIG. 2A is a table illustrating the relation between electrolytic solution pH and negative electrode capacity of the magnesium battery 100 in which an aqueous solution containing citric acid ions is used; FIG. 2B is a table illustrating the relation between electrolytic solution pH and negative electrode capacity of the magnesium battery 100 in which an aqueous solution containing succinic acid ions is used; and FIG. 2C is a table illustrating the relation between electrolytic solution pH and negative electrode capacity of the magnesium battery in which an aqueous solution of sodium chloride is used. Further, FIGS. 3A to 3C are the graphs which illustrate the relation between electrolytic solution pH and negative electrode capacity, each corresponding to FIGS. 2A to 2C.

As illustrated in FIGS. 2A to 2C and FIGS. 3A to 3C, the case in which an aqueous solution containing citric acid ions is used and the case in which an aqueous solution containing succinic acid ions is used were proven to have higher negative electrode capacity than the case in which an aqueous solution containing sodium chloride is used. For the case in which an aqueous solution of sodium chloride was used, the negative electrode capacity was 600 mAh/g at most at pH 8.1. However, for the case in which an aqueous solution containing citric acid ions or succinic acid ions was used, it was at least 790 mAh/g in a pH range from 8 to 12. Thus, except the range around pH 6, the case in which an aqueous solution containing citric acid ions or succinic acid ions was used always had higher negative electrode capacity.

For the case in which an aqueous solution containing citric acid ions or succinic acid ions was used, high negative electrode capacity was obtained in the region in which the aqueous solution had a pH from 7 to 11, when the aqueous solution concentration had any value between 0.21 mol/L and 0.89 mol/L. In particular, when the concentration of the aqueous solution was 0.5 mol/L, a negative electrode capacity of at least 1500 mAh/g was obtained even when the aqueous solution had pH 12, indicating a significant capacity size. Further, when the aqueous solution concentration was 0.9 mol/L, the negative electrode capacity was as small as about 0 mAh/g if the aqueous solution had pH 12.

### [Embodiment 2]

According to the embodiment described above, it was sufficient to have polyhydric carboxylic acid ions in an electrolyte solution. However, it was preferable that the electrolytic solution additionally contain aluminum hydroxide coordination complex with carboxylic acid ions with a valence of 3 or higher. Accordingly, the negative electrode 110 composed of magnesium may have increased hydrogenation voltage, and thus the self-discharge is suppressed even in an acidic region and the original magnesium capacity can be achieved. As a result, even when the pH is changed due to a positive electrode reaction, an electromotive force may be maintained. Examples of the carboxylic acid with a valence of 3 or higher include citric acid. When aluminum hydroxide forms a complex with citric acid ion (Al(OH)₄⁻⇔ (Al(OH)⁻)ₓ(C₆H₈O₇³⁻)_{y}), precipitation of aluminum hydroxide is prevented. It is believed that the coordination of carboxylic acid ions needs to have a valence of 3 or higher because it is necessary for the carboxyl group to have a stereo structure.

### Example 2

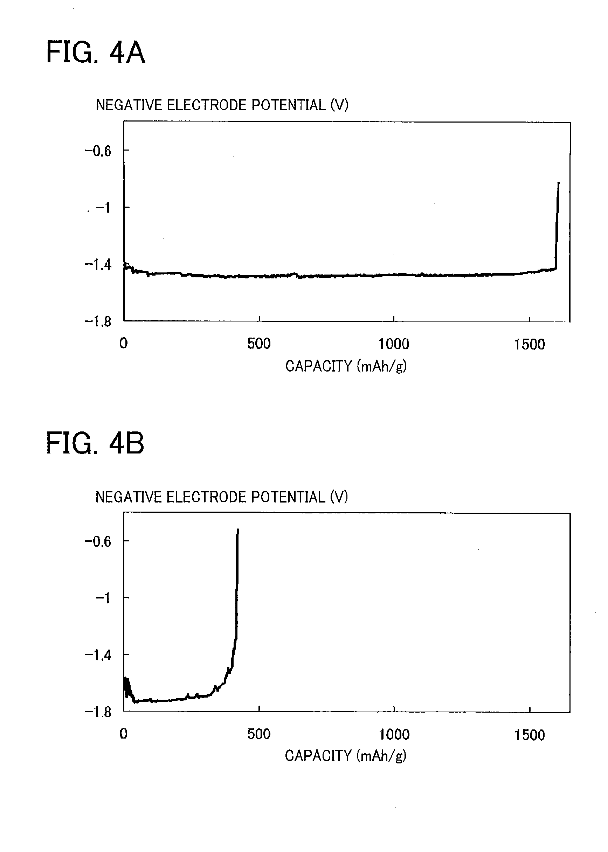

A half-cell experiment was performed for a magnesium battery 100 which contains, in an electrolyte solution, an aluminum hydroxide coordination complex with citric acid ions and also a magnesium battery 100 which does not contain such complex in an electrolyte solution. All the electrolyte solutions were prepared with pH 5. FIG. 4A is a graph illustrating the relation between negative electrode capacity and negative electrode potential of the magnesium battery 100 containing, in an electrolyte solution, an aluminum hydroxide coordination complex with citric acid ions, while FIG. 4B is a graph illustrating the relation between negative electrode capacity and negative electrode potential of the magnesium battery 100 not containing, in an electrolyte solution, an aluminum hydroxide coordination complex with citric acid ions.

As illustrated in FIGS. 4A and 4B, for a case in which an aluminum hydroxide coordination complex with citric acid ions is contained in an electrolyte solution, the negative electrode potential was maintained at -1.4 V or so even at a negative electrode capacity of more than 1500 mAh/g. On the other hand, for a case in which an aluminum hydroxide coordination complex with citric acid ions is not contained in an electrolyte solution, the negative electrode potential was close to 0 V at a negative electrode capacity of less than 500 mAh/g. As described above, it was proven that, when an aluminum hydroxide coordination complex with citric acid ions is contained in an electrolyte solution, self-discharge is suppressed even in an acidic region, and thus the original capacity of magnesium can be achieved.

## Claims

1. A magnesium battery comprising:
a negative electrode which is composed of magnesium and
a liquid-retaining section capable of retaining an aqueous electrolytic solution capable of causing the elution of magnesium ions from the negative electrode,
wherein the liquid-retaining section retains an aqueous solution of a citric acid salt as an aqueous electrolytic solution.

2. The magnesium battery according to claim 1, wherein the liquid-retaining section retains a citric acid salt in a dry state.

3. The magnesium battery according to claim 1, wherein the liquid-retaining section retains an aqueous solution of a citric acid salt as an aqueous electrolytic solution.

4. The magnesium battery according to claim 3, wherein the concentration of citric acid ions included in the aqueous electrolytic solution is between 0.21 mol/L and 0.89 mol/L.

5. The magnesium battery according to claim 3 or 4, wherein the aqueous electrolytic solution has a pH between 7 and 11.

6. The magnesium battery according to any one of claims 3 to 5, wherein the aqueous electrolytic solution includes an aluminum hydroxide coordination complex with citric acid ions.

7. A method of using a citric acid salt as an electrolyte of a magnesium battery.
